# EUROPÄISCHE PATENTSCHRIFT

(11) **EP 1 273 338 B1**
(45) Veröffentlichungstag und Bekanntmachung des Hinweises auf die Patenterteilung: **21.02.2007**
(21) Anmeldenummer: 02013213.0
(22) Anmeldetag: 15.06.2002
(51) Int. Cl.: B01D 53/94, F01N 3/08

(54) **Einrichtung und Verfahren zur Abgasnachbehandlung mit einem Stickoxid-Speicherkatalysator und einem SCR-Katalysator**
Device and process for exhaust gas purification comprising a nitrogen oxide storage catalyst and a SCR catalyst
Dispositif et procédé pour la purification de gaz d'échappement avec un catalyseur d'accumulation des oxydes d'azote et un catalyseur SCR

(30) Priorität: 03.07.2001 DE 10131588
(43) Veröffentlichungstag der Anmeldung: 08.01.2003
(73) Patentinhaber: DaimlerChrysler AG, 70567 Stuttgart (DE)
(72) Erfinder: Binder, Klaus, Prof., Dr., 73779 Deizisau (DE); Günther, Josef, 71563 Affalterbach (DE); Hertzberg, Andreas, 70374 Stuttgart (DE); Konrad, Brigitte, 89134 Blaustein (DE); Krutzsch, Bernd, Dr., 73770 Denkendorf (DE); Ölschlegel, Heinz-Jost, 73274 Notzingen (DE); Renfftlen, Stefan, 73054 Eislingen (DE); Voigtländer, Dirk, Dr., 70825 Korntal-Münchingen (DE); Weibel, Michel, Dr., 70619 Stuttgart (DE); Weirich, Marko, 68161 Mannheim (DE); Wenninger, Günter, 70599 Stuttgart (DE); Wunsch, Rolf, Dr., 76316 Malsch (DE)

(56) Entgegenhaltungen:
- EP-A- 0 893 154
- EP-A- 0 915 244
- EP-A- 1 027 919
- EP-A- 1 050 675
- DE-A- 19 944 699
- PATENT ABSTRACTS OF JAPAN vol. 1997, no. 03, 31. März 1997 (1997-03-31) & JP 08 294618 A (HONDA MOTOR CO LTD), 12. November 1996 (1996-11-12)

## Beschreibung

Die vorliegende Erfindung betrifft eine Abgasnachbehandlungseinrichtung für eine Brennkraftmaschine mit den Merkmalen des Oberbegriffs des Anspruchs 1 und ein Verfahren mit den Merkmalen des Oberbegriffs des Anspruchs 7.

Aus der Patentschrift EP 0 560 991 B1 ist eine Abgasnachbehandlungseinrichtung mit Stickoxid-Speicherkatalysator bekannt, bei der dem Abgas der zugeordneten Brennkraftmaschine während der mageren Betriebsphasen die Stickoxide durch Speicherung im Stickoxid-Speicherkatalysator entzogen werden. In relativ kurzen, fetten Betriebsphasen der Brennkraftmaschine werden die meist in Nitratform im Speichermaterial des Stickoxid-Speicherkatalysators gespeicherten Stickoxide wieder freigesetzt und an den vorzugsweise durch Edelmetalle wie z.B. Platin gebildeten katalytischen Zentren des Katalysators mit den reduzierenden Abgasbestandteilen des fetten Abgases zu Stickstoff umgesetzt (Nitratregeneration). Durch den sich wiederholenden Wechsel zwischen mageren und fetten Betriebsphasen können die Abgase von überwiegend mager betriebenen Brennkraftmaschinen, wie mager betriebene direkteinspritzende Ottomotoren oder Dieselmotoren wirksam von Stickoxiden befreit werden.

Stickoxid-Speicherkatalysatoren unterliegen jedoch einer allmählichen Deaktivierung durch Aufnahme von im Abgas vorhandenen Schwefel, welcher in Form von Sulfaten im Speichermaterial eingelagert wird und deshalb die Stickoxidspeicherfähigkeit des Stickoxid-Speicherkatalysators mit der Zeit zunehmend verringert.

Aus der Offenlegungsschrift DE 198 27 195 A1 ist ein Verfahren bekannt, durch das solcherart deaktivierte Stickoxid-Speicherkatalysatoren wieder regeneriert werden können. Bei Verfahren dieser oder ähnlicher Art wird der gespeicherte Sulfatschwefel unter reduzierenden Bedingungen bei erhöhten Temperaturen in Form von gasförmigen Verbindungen aus dem Stickoxid-Speicherkatalysator freigesetzt (Desulfatisierung).

Vorzugsweise wird die Reduktion des Sulfatschwefels in Schwefeldioxid (SO2) angestrebt. Je nach Menge des im Stickoxid-Speicherkatalysator eingelagerten Schwefels und nach Art der Verfahrensführung der Desulfatisierung können dabei allerdings mehr oder weniger große Anteile des Sulfatschwefels auch zu gasförmigem Schwefelwasserstoff (H2S) reduziert werden. Da Schwefelwasserstoff bereits in geringsten Konzentrationen als äußerst unangenehm riechend wahrgenommen wird, sollte bei der Desulfatisierung der durch Schwefel deaktivierten Stickoxid-Speicherkatalysatoren die Emission von H2S in die Umgebung unbedingt vermieden werden. Bedingungen, ähnlich derer, wie sie bei einer Desulfatisierung gezielt eingestellt werden, können jedoch auch bei besonderen Fahrzuständen, z.B. bei Vollastanreicherung eintreten und können dann ebenfalls eine unerwünschte Emission von H2S in die Umgebung verursachen.

Aus der Offenlegungsschrift DE 199 21 974 A1 ist eine Abgasnachbehandlungseinrichtung bekannt, welche zusätzlich zu einem Stickoxid-Speicherkatalysator ein Partikelfilter aufweist, dem ein Oxidationskatalysator vorgeschaltet ist, wobei der Stickoxid-Speicherkatalysator stromab des Partikelfilters in der Abgasnachbehandlungseinrichtung angeordnet ist. Mit der gewählten Anordnung von Oxidationskatalysator, Partikelfilter und Stickoxid-Speicherkatalysator können sowohl Stickoxide als auch Partikel in wirksamer Weise aus dem Abgas speziell von Dieselmotoren entfernt werden. Der Oxidationskatalysator hat dabei die Funktion, das im Abgas enthaltene Stickstoffmonoxid (NO) zu Stickstoffdioxid (NO2) zu oxidieren. Das gebildete NO2 oxidiert die überwiegend aus Kohlenstoff bestehenden Partikel, welche auf dem Partikelfilter abgelagert werden, bereits bei relativ niedrigen Temperaturen. Allerdings besteht auch hier die Notwendigkeit, den Stickoxid-Speicherkatalysator von Zeit zu Zeit einer Desulfatisierungsprozedur zu unterziehen und es besteht mithin bei entsprechenden Betriebszuständen bzw. Fahrzuständen auch das Problem einer H2S-Freisetzung in die Umgebung.

Die EP A-1.027.919 beschreibt eine Abgasreinigungsvorrichtung für eine Dieselbrennkraftmaschine mit einem Stickoxid-Speicherkatalysator und einem nachgeschalteten SCR-Katalysator.

Die EP-A-1.050.675 bezieht sich auf ein Verfahren zum Betrieb einer Brennkraftmaschine mit einer Abgasnachbehandlungseinrichtung, in der während einer Desulfatierung des Stickoxid-Speicherkatalysators eine reduzierende Abgaszusammensetzung stromauf des Speicherkatalysators eingestellt wird. Das im Speicherkatalysator (4) gebundene Schwefel wird unter Bildung von Schwefelwasserstoff freigesetzt. Das gebildete Abgas wird einem Dreiwegekatalysator oder einem Oxidationskatalysator zugeführt, in dem Schwefelwasserstoff zu Schwefeldioxid umgesetzt wird.

Aufgabe der Erfindung ist es, eine Abgasnachbehandlungseinrichtung mit Stickoxid-Speicherkatalysator, sowie ein Verfahren zum Betreiben der Abgasnachbehandlungseinrichtung anzugeben, so dass eine Freisetzung von H2S in die Umgebung vermieden wird.

Diese Aufgabe wird durch eine Vorrichtung mit den Merkmalen des Anspruchs 1 und durch ein Verfahren mit den Merkmalen des Anspruchs 7 gelöst.

Die erfindungsgemäße Abgasnachbehandlungseinrichtung zeichnet sich dadurch aus, dass in einem Desulfatisierungsbetriebsmodus der Brennkraftmaschine mit reduzierender Abgaszusammensetzung das dabei aus dem Stickoxid-Speicherkatalysator austretende Abgas zur Entfernung von während der Desulfatisierung gebildetem H2S dem SCR-Katalysator zuführbar ist. Hierbei ist unter einem SCR-Katalysator (SCR = selective catalytic reduction) ein üblicherweise zur Stickoxid-Entfernung unter oxidierenden Bedingungen eingesetzter Katalysator zu verstehen. Katalysatoren dieser Art katalysieren eine selektive Reduktionsreaktion bei der Stickoxide mit einem Reduktionsmittel, vorzugsweise Ammoniak (NH3), zu unschädlichem N2 reduziert werden.

Überraschenderweise hat sich in entsprechenden Versuchen gezeigt, dass einem SCR-Katalysator zugeführtes H2S unter reduzierenden Bedingungen zu SO2 umgesetzt wird, wodurch in wirksamer Weise die Abgabe von H2S an die Umwelt während der bei reduzierenden Bedingungen durchgeführten Desulfatisierung von Stickoxid-Speicherkatalysatoren verhindert werden kann. Da SO2 weitaus weniger geruchsintensiv ist als H2S, wird damit das Problem der H2S-Freisetzung in die Umwelt auf wirksame Weise gelöst. Zudem können die gerade zur Vermeidung der H2S-Freisetzung häufig kompliziert gestalteten Desulfatisierungsverfahren drastisch vereinfacht werden. Unter reduzierend ist hier wie üblich eine Gaszusammensetzung zu verstehen, welche ungeachtet eines eventuell vorhandenen Restsauerstoffanteils einen Überschuss an reduzierend wirkenden Bestandteilen wie Wasserstoff, Kohlenmonoxid und/oder Kohlenwasserstoffe aufweist. Insgesamt liegt somit ein Sauerstoffdefizit hinsichtlich der Oxidationsmöglichkeit der genannten reduzierend wirkenden Bestandteile vor.

Die angesprochenen Vorteile der Verhinderung des Freisetzens von H2S bzw. NH3 in die Umgebung treten selbstverständlich auch dann ein, wenn weitere Komponenten zur Abgasreinigung wie ein Partikelfilter oder ein 3-Wege-Katalysator oder ein Oxidationskatalysator in der Abgasnachbehandlungseinrichtung angeordnet sind, sofern der SCR-Katalysator stromab des Stickoxid-Speicherkatalysators angeordnet ist.

In einer besonders bevorzugten Ausführungsform gemäß Anspruch 2 ist der SCR-Katalysator als vanadiumpentoxidhaltiger (V2O5-haltiger) und/oder wolframoxidhaltiger (WO3-haltiger) und/oder titandioxidhaltiger (TiO2-haltiger) SCR-Katalysator ausgeführt.

Das erfindungsgemäße Verfahren gemäß Anspruch 7 zeichnet sich dadurch aus, dass in einem Desulfatisierungsbetriebsmodus der Brennkraftmaschine mindestens die Verfahrensschritte
- Einstellen einer reduzierenden Abgaszusammensetzung stromauf des Stickoxid-Speicherkatalysators,
- Freisetzen des in dem Stickoxid-Speicherkatalysator gebundenen Schwefels unter Bildung von Schwefelwasserstoff (H2S),
- Zuführen des Schwefelwasserstoffs zu einem stromab des Stickoxid-Speicherkatalysators in der Abgasnachbehandlungseinrichtung angeordneten SCR-Katalysator
- und Umsetzen des Schwefelwasserstoffs im SCR-Katalysator zu Schwefeldioxid (SO2) unter reduzierenden Abgasbedingungen, durchgeführt werden.

Der Desulfatisierungsbetriebsmodus der Brennkraftmaschine kann z.B in einer rein fetten Betriebsweise der Brennkraftmaschine mit einem Luft-Kraftstoffverhältnis (λ) von 0,98 oder weniger bestehen, welcher über mehrere Sekunden bei gleichzeitig erhöhten Abgastemperaturen von ca. 500 °C oder mehr eingestellt wird. Es kann jedoch auch ein oszillierender Mager-Fett-Zyklus-Betrieb eingestellt werden oder mehrfach durch Magerbetrieb getrennte einzelne kurze Fettbetriebsphasen zur Desulfatisierung eingestellt werden. Gemäß des erfindungsgemäßen Verfahrens kann die Desulfatisierung so durchgeführt werden, dass hierbei überwiegend H2S entsteht, welcher im nachgeschalteten SCR-Katalysator bei reduzierenden Bedingungen in SO2 umgewandelt wird, so dass auf diese Weise das Geruchsproblem bei der Desulfatisierung vermieden wird. Gleichzeitig kann auf die Anwendung von Desulfatisierungsverfahren verzichtet werden, die aus Gründen der Vermeidung einer H2S-Freisetzung besonders kompliziert oder langwierig gestaltet sind, wie z.B. einer nur sehr geringen Anfettung von etwa λ = 0,99 mit ev. mehrfachen Unterbrechungen durch magere Betriebsphasen.

Bekanntermaßen ist die Neigung einer H2S-Freisetzung bei der Desulfatisierung von relativ stark mit Schwefel beladenen Stickoxid-Speicherkatalysatoren entsprechend stärker ausgeprägt. Um die H2S-Freisetzung aufgrund starker Schwefelakkumulation zu vermeiden, kann die Desulfatisierung in relativ kurzen Abständen vorgenommen werden, was allerdings mit Blick auf den Kraftstoffverbrauch und die Fahrbarkeit nachteilig ist. Die Anwendung des erfindungsgemäßen Verfahrens erlaubt es jedoch, eine relativ große Schwefelakkumulation im Stickoxid-Speicherkatalysator zu tolerieren, weshalb die Zeitintervalle für die Desulfatisierungen entsprechend groß gewählt werden können, was erhebliche Vorteile für den Brennkraftmaschinenbetrieb insgesamt mit sich bringt.

Weitere vorteilhafte Ausgestaltungen und Weiterbildungen der Erfindung ergeben sich aus den restlichen Unteransprüchen und aus dem nachfolgend anhand der Zeichnung dargestellten Ausführungsbeispiel und der dargestellten Messergebnisse.

Dabei zeigt:
- Fig. 1: eine schematisches Blockbild einer Brennkraftmaschine mit zugehöriger Abgasreinigungsanlage,
- Fig. 2: ein in Diagrammform dargestelltes Messergebnis eines Laborversuchs mit periodischem Gaswechsel und zyklischer H2S-Zufuhr ohne SCR-Katalysator im Gasweg,
- Fig. 3: ein Diagramm ähnlich Fig. 2, mit der Darstellung des Ergebnisses bei einem Versuch ähnlich wie bei Fig. 2, jedoch mit SCR-Katalysator im Gasweg

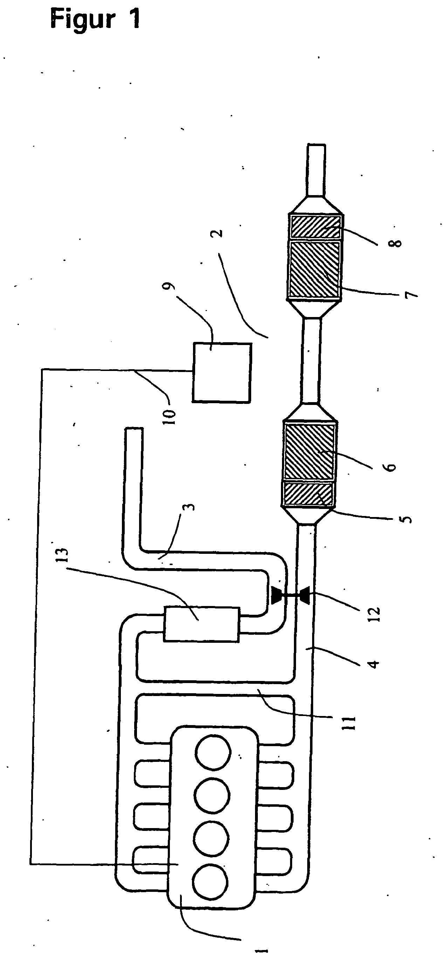

In der in Fig. 1 dargestellten Ausführungsform dient ein Dieselmotor als Brennkraftmaschine 1. Der Brennkraftmaschine wird über die Ansaugluftleitung 3 Verbrennungsluft zugeführt. Der Brennkraftmaschine 1 ist die Abgasnachbehandlungseinrichtung 2 zugeordnet, welche in der Abgasleitung 4 einen Oxidationskatalysator 5, einen Partikelfilter 6, einen Stickoxid-Speicherkatalysator 7 und einen SCR-Katalysator 8 aufweist.

Im vorliegenden Fall ist einerseits der Partikelfilter 6 unmittelbar dem Oxidationskatalysator 5 nachgeschaltet und andererseits der SCR-Katalysator 8 unmittelbar dem Stickoxid-Speicherkatalysator 7 nachgeschaltet. Stromauf des Oxidationskatalysators 5 ist in der Abgasleitung 4 ein Abgasturbolader 12 untergebracht, welcher zur Verdichtung der Verbrennungsluft dient, welche nach der Verdichtung von einem in der Ansaugluftleitung angeordnetem Ladeluftkühler 13 gekühlt wird. Der Brennkraftmaschine 1 ist ferner eine Steuereinheit 9 zugeordnet, welche u.a. zur Steuerung der Verbrennung dient.

Zur Übertragung der dazu notwendigen Steuersignale ist eine Steuer- bzw. Signalleitung 10 vorhanden. Weitere der Messung und Kontrolle von Betriebsparametern dienende Bauteile wie Sauerstoffsonden, Temperaturfühler, Drosselklappen, weitere Signalleitungen und dergleichen sind der Übersichtlichkeit wegen nicht mit in die Zeichnung aufgenommen, können aber selbstverständlich je nach Bedarf als Peripherie zur Brennkraftmaschine 1 bzw. zur Abgasnachbehandlungseinrichtung 2 vorhanden sein.

Die Brennkraftmaschine 1 wird nun primär mager betrieben. Im Abgas enthaltene Partikel werden im Partikelfilter 6 zurückgehalten. Beim Durchgang des Abgases durch den Oxidationskatalysator 5 wird im Abgas enthaltenes NO zu NO2 oxidiert und kann dann im nachgeschalteten Partikelfilter 6 seinerseits dort abgelagerte kohlenstoffhaltige Partikel oxidieren, wodurch eine kontinuierliche Regeneration des Partikelfilters 6 erfolgt. Das dem Partikelfilter entströmende, weiterhin stickoxidhaltige Abgas wird dem Stickoxid-Speicherkatalysator 7 zugeführt, der dem Abgas die Stickoxide durch Speicherung, vorwiegend als Nitrat, entzieht. Je nach Menge der gespeicherten Stickoxide wird von Zeit zu Zeit eine Nitratregeneration des Speicherkatalysators 7 durchgeführt. Hierzu wird die Brennkraftmaschine 1 für kurze Zeit auf Fettbetrieb umgesteuert, wodurch ein fettes Abgas erzeugt wird, welches einen Überschuss an Reduktionmitteln wie Kohlenmonoxid, Wasserstoff oder Kohlenwasserstoffe aufweist. Dies hat eine Freisetzung der im Stickoxid-Speicherkatalysator 7 gespeicherten Stickoxide zur Folge, die an den in der katalytischen Schicht des Stickoxid-Speicherkatalysators vorhandenen Edelmetallzentren von den Reduktionsmitteln des Abgases reduziert werden.

Als Reduktionsprodukt der Stickoxidreduktion entsteht hauptsächlich Stickstoff. Zusätzlich werden je nach den Bedingungen unter denen die Nitratregeneration durchgeführt wird, auch mehr oder weniger große Mengen des Reduktionsproduktes NH3 gebildet, dessen Freisetzung in die Umgebung unerwünscht ist. Da typischerweise insbesondere V2O5-haltige SCR-Katalysatoren eine ausgeprägte NH3-Speicherfähigkeit besitzen, kann mit Hilfe des erfindungsgemäß stromab des Stickoxid-Speicherkatalysators 7 angeordneten SCR-Katalysators 8 NH3 jedoch durch Einlagerung abgefangen werden. Dieses eingelagerte NH3 steht in dem auf die Nitratregeneration folgenden mageren Brennkraftmaschinenbetrieb als zusätzliches Reduktionsmittel zur selektiven Stickoxid-Reduktion im SCR-Katalysator 8 zur Verfügung. Dadurch wird der Wirkungsgrad der Stickoxidentfernung in der Abgasnachbehandlungseinrichtung 2 zusätzlich in vorteilhafter Weise gesteigert.

Bei der Verwendung von schwefelhaltigem Kraftstoff enthält das Abgas der Brennkraftmaschine 1 Schwefeldioxid, das vom Katalysatormaterial des Stickoxid-Speicherkatalysators 7 unter Bildung von stabilen Sulfaten aufgenommen wird, was dessen Stickoxidspeicherfähigkeit im Laufe der Zeit zunehmend vermindert. Der Stickoxid-Speicherkatalysator 7 muß daher in einer Desulfatisierungsprozedur immer wieder von eingelagertem Schwefel befreit, d.h. regeneriert werden. Hierfür wird die Brennkraftmaschine 1 in einen Desulfatisierungsbetriebsmodus geschalten. Dieser Desulfatisierungsbetriebsmodus beinhaltet eine z.B. durch Kraftstoffnacheinspritzung bewirkte Anhebung der Abgastemperatur auf über 500 °C und die Einstellung einer reduzierenden Abgaszusammensetzung auf Werte von ca. 0,95 oder weniger für das Luft-Kraftstoffverhältnis (λ), ähnlich wie zum Zwecke der Nitratregeneration. Unter diesen Bedingungen gelingt es, die relativ stabilen Sulfate im Stickoxid-Speicherkatalysator 7 reduktiv zu zersetzen. Dabei entstehen je nach Temperatur, Stärke der Anfettung und Menge des im Stickoxid-Speicherkatalysator gespeicherten Schwefels mehr oder weniger große Mengen an H2S. Dieses H2S wird jedoch an dem erfindungsgemäß stromab des Stickoxid-Speicherkatalysators 7 angeordneten SCR-Katalysators 8 unter den reduzierenden Bedingungen der Desulfatisierung zu weit weniger geruchsintensivem SO2 umgesetzt. Dadurch wird das üblicherweise mit der Desulfatisierung von Stickoxid-Speicherkatalysatoren verbundene Geruchsproblem vermieden.

Ein besonderer Vorteil des Einsatzes des SCR-Katalysators 8 stromab des Stickoxid-Speicherkatalysators 7 zum Zwecke der H2S-Umwandlung zu SO2 unter reduzierenden Bedingungen liegt darin, dass dadurch die Prozessführung der Desulfatisierung vereinfacht werden kann, da diese nicht auf die Minimierung des unerwünschten Desulfatisierungsproduktes H2S hin ausgerichtet sein muss. Z.B. lässt sich die Desulfatisierung durch eine stärkere Anfettung mit λ-Werten unterhalb 0,95 und damit verbundener stärkerer und schnellerer H2S-Freisetzung aus dem Stickoxid-Speicherkatalysator 7 deutlich verkürzen.

Selbstverständlich ist die Einsatzmöglichkeit des SCR-Katalysators 8 stromab des Stickoxid-Speicherkatalysators 7 zur Umsetzung von H2S in SO2 unter reduzierenden Bedingungen nicht von der Anwesenheit der vorgeschalteten Reinigungskomponenten wie z.B. Partikelfilter 6 und Oxidationskatalysator 5 abhängig. Die beschriebene Wirkung tritt vielmehr unabhängig hiervon ein, weshalb auch andere bzw. weitere, vom jeweiligen Bedarfsfall bestimmte, Abgasreinigungskomponenten dem SCR-Katalysator 8 vorgeschalten oder nachgeschalten sein können.

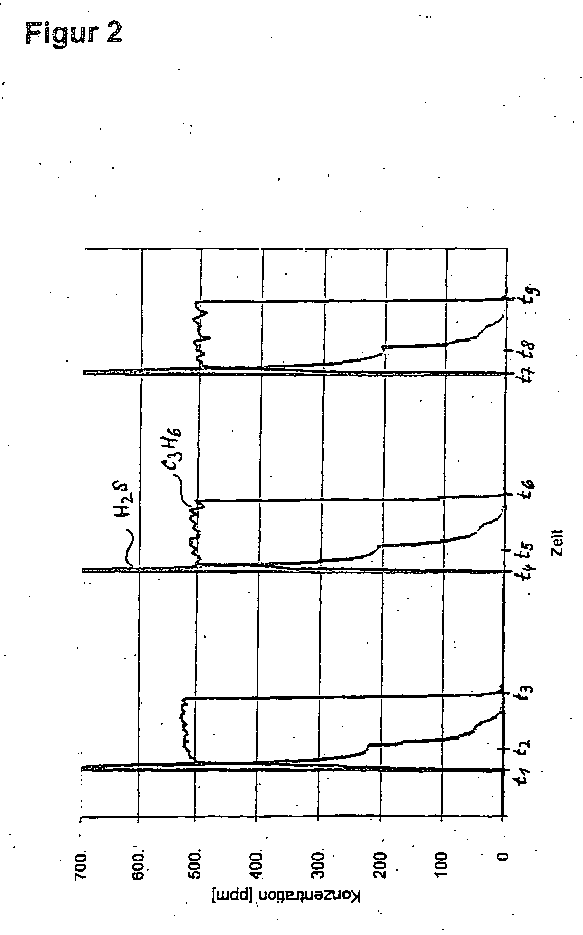

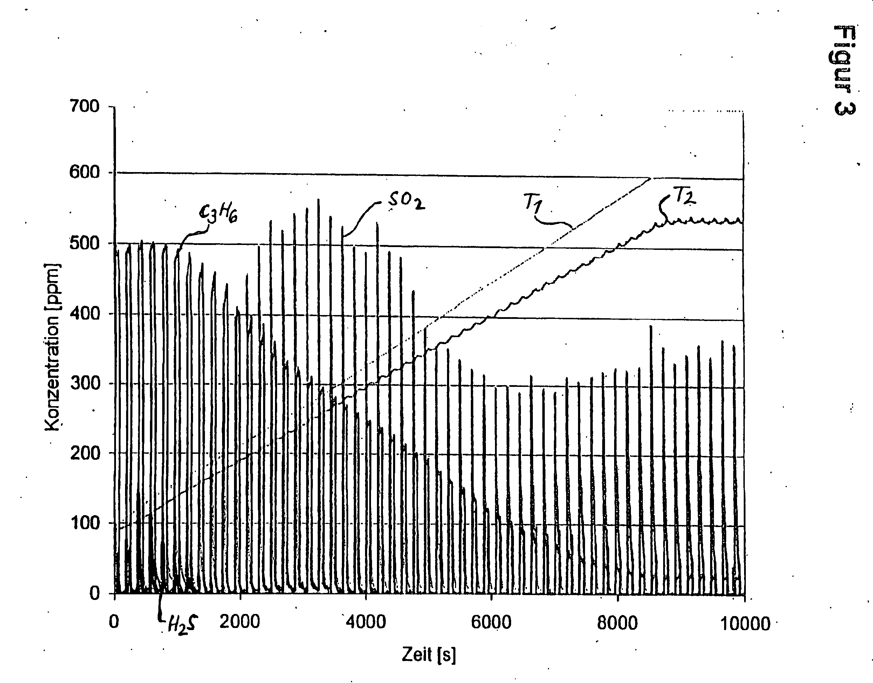

Die in Fig. 2 und Fig. 3 gezeigten Diagramme verdeutlichen die Wirkung des SCR-Katalysators bezüglich der H2S-Umsetzung zu SO2 unter reduzierenden Bedingungen. Dargestellt sind Ergebnisse von Laborversuchen, bei welchen synthetische Testgase A, B und C mit folgenden Zusammensetzungen eingesetzt wurden:

| | |
|---|---|
| Testgas A: | 8 % CO2 |
| | 10 % O2 |
| | 8 % H2O |
| Testgas B: | 2500 ppm H2 |
| | 7500 ppm CO |
| | 500 ppm C3H6 |
| | 2000 ppm O2 |
| | 8 % CO2 |
| | 8 % H2O |
| Testgas C: | analog Testgas B, jedoch zusätzlich |
| | 500 ppm H2S |

Durch Testgas A wird ein Abgas einer stark mager betriebenen Brennkraftmaschine nachgebildet. Die Zusammensetzung des Testgases B entspricht etwa der Zusammensetzung des Abgases einer fett betriebenen Brennkraftmaschine, wie es in ähnlicher Weise auch bei der Einstellung eines Desulfatisierungsbetriebsmodus zu erwarten ist. Testgas C enthält gegenüber Testgas B bei sonst gleicher Zusammensetzung zusätzlich H2S, in einer Konzentration, wie sie bei einer entsprechend durchgeführten Desulfatisierung auftreten kann.

In einem Blindversuch wurde die Labortestanlage zunächst ohne Katalysator in zyklischem Wechsel nacheinander mit den Testgasen beaufschlagt und die Konzentrationen der Gase ausgangsseitig der Anlage messtechnisch erfasst. Gemäß den in Fig. 2 auf der horizontalen Zeitachse des Diagramms eingetragenen Zeiten t1 bis t 9 wurde die Labortestanlage zu den Zeitpunkten t1, t4, und t7 mit dem H2S-haltigen Testgas C beaufschlagt. Zu den Zeitpunkten t2, t5, und t8 wurde auf Testgas B gewechselt und zu den Zeitpunkten t3, t6 und t 9 auf Testgas A. Die Dauer der Zufuhr des Testgases C (t2-t1, t5-t4, t8-t7) betrug hierbei jeweils 20 s. Entsprechend betrug die Dauer der Zufuhr des Testgases B jeweils 40 s und die Dauer der Zufuhr des Testgases A jeweils 120 s. Wie im Diagramm der Fig. 2 zu erkennen ist, wird in den Phasen, in denen das H2S-haltige Testgas C zugeführt wird jeweils eine entsprechend hohe H2S-Konzentration gemessen, wobei unmittelbar nach Zuschalten ein gewisses Überschwingen über den eingestellten Sollwert zu beobachten ist, welches messtechnisch bedingt ist. Nach Umschalten auf das H2S-freie fette Testgas B sinkt die H2S-Konzentration rasch auf Null ab. Das Umschalten auf Zufuhr des mageren Testgases A ist dadurch zu erkennen, dass die C3H6-Konzentration auf Null absinkt. Beim nächsten Aufschalten des Testgases C, welches ebenfalls C3H6 enthält, wird ein sofortiger Anstieg der C3H6-Konzentration auf den Sollwert von 500 ppm registriert.

Von besonderer Bedeutung bei diesem Blindversuch ist, dass hierbei keine SO2-Bildung stattfindet, wie messtechnisch nachgewiesen wurde. Dies ist durch das Fehlen einer entsprechenden SO2-Konzentrationsspur im Diagramm zu erkennen.

In Fig. 3 ist das Ergebnis eines Laborversuchs dargestellt, welcher auf analoge Weise durchgeführt wurde. Jedoch wurden die Testgase A, B und C in diesem Versuch über einen herkömmlichen SCR-Katalysator mit einem V205-Gehalt von 3 % geführt. Die eingestellte Raumgeschwindigkeit des Gasdurchsatzes betrug 35000 1/h. Während des periodisch durchgeführten Gaswechsels, wie oben beschrieben, wurde gleichzeitig die Temperatur der Versuchsanlage, bzw. des Katalysators stetig erhöht. Dies ist im Messdiagramm der Fig. 3 durch die Messkurven T1 und T2 dargestellt, welche mit den vor Katalysator und nach Katalysator gemessenen Temperaturen korrespondieren. Aufgrund des im Diagramm der Fig.3 gegenüber dem Diagramm der Fig. 2 veränderten Zeitmaßstabs, sind.die während des zyklischen Gaswechsels auftretenden Konzentrationswechsel der Gaskomponenten hier als schmale Spitzen zu erkennen.

Deutlich erkennbar ist jedoch, dass nur während des Versuchsanlaufs bei Temperaturen unterhalb 150 °C geringe H2S-Mengen ausgangsseitig der Versuchsanlage messbar sind. Oberhalb von etwa 150 °C ist H2S nicht mehr nachweisbar und es findet in steigendem Maße eine Umsetzung von H2S zu SO2 während der Versuchsphasen mit Zufuhr fetten Testgases statt. Die mit steigender Temperatur zunehmende Abnahme der C3H6-Konzentration in den Versuchsphasen mit Zufuhr fetten Testgases ist für die H2S-Umsetzung zu SO2 ohne Belang und auf Oxidation bzw. C3H6-Umsetzung auf Basis eines Steamreformingprozesses zurückzuführen.

Insgesamt zeigt der Laborversuch eindrucksvoll, dass selbst verhältnismäßig hohe H2S-Konzentrationen in einem Desulfatisierungsprozess unter reduzierenden Bedingungen oberhalb etwa 150 °C an einem herkömmlichen SCR-Katalysator zu SO2 umgesetzt werden.

## Patentansprüche

1. Brennkraftmaschine (1) mit einer Steuereinheit (9) und einer Abgasnachbehandlungseinrichtung, umfassend einen Stickoxid-Speicherkatalysator (7) und einen stromab des Stickoxid-Speicherkatalysators (7) angeordneten SCR-Katalysator (8), wobei die Steuereinheit (9) von Zeit zu Zeit eine Nitratregeneration unter Bildung von Ammoniak durchführen und die Brennkraftmaschine (1) in einem Desulfatisierungsbetriebsmodus betreiben kann, in welchem eine reduzierende Abgaszusammensetzung erzeugt und Schwefelwasserstoff aus dem Stickoxid-Speicherkatalysator (7) ausgetragen und im SCR-Katalysator (8) oxidiert wird,
wobei
der SCR-Katalysator (8) in der Lage ist, während der Nitratregeneration gebildetes Ammoniak einzulagern und bei oxidierender Abgaszusammensetzung im Abgas enthaltene Stickoxide mit eingelagertem Ammoniak zu reduzieren.

2. Brennkraftmaschine nach Anspruch 1,
**dadurch gekennzeichnet, dass**
der SCR-Katalysator (8) vanadiumpentoxidhaltig (V₂O₅-haltig) und/oder wolframoxidhaltig (WO₃-haltig) und/oder titandioxidhaltig (TiO₂-haltig)ausgeführt ist.

3. Brennkraftmaschine nach Anspruch 1 oder 2, **dadurch gekennzeichnet, dass**
die Abgasnachbehandlungseinrichtung (2) zusätzlich ein Partikelfilter (6) aufweist.

4. Brennkraftmaschine nach Anspruch 3,
**dadurch gekennzeichnet, dass**
die Abgasnachbehandlungsvorrichtung (2) zusätzlich einen dem Partikelfilter (6) vorgeschalteten Oxidationskatalysator (5) aufweist.

5. Brennkraftmaschine nach Anspruch 3 oder 4,
**dadurch gekennzeichnet, dass**
der Stickoxid-Speicherkatalysator (7) in der Abgasnachbehandlungseinrichtung (2) stromab des Partikelfilters (6) angeordnet ist.

6. Brennkraftmaschine nach Anspruch 4,
**dadurch gekennzeichnet, dass**
der Stickoxid-Speicherkatalysator (7) in der Abgasnachbehandlungseinrichtung (2) stromauf des Oxidationskatalysators (5) angeordnet ist.

7. Verfahren zum Betrieb einer Abgasnachbehandlungseinrichtung einer Brennkraftmaschine, umfassend einen Stickoxid-Speicherkatalysator (7) und einen stromab des Stickoxid-Speicherkatalysators (7) angeordneten SCR-Katalysator (8), bei welchem
- bei oxidierender Abgaszusammensetzung vom Stickoxid-Speicherkatalysator (7) im Abgas enthaltene Stickoxide und Schwefeloxide entzogen und gespeichert werden, wonach
- bei einer Nitratregeneration im Stickoxid-Speicherkatalysator (7) gespeicherte Stickoxide wenigstens teilweise zu Ammoniak reduziert werden, und bei der Nitratregeneration gebildetes Ammoniak durch den SCR-Katalysator (8) abgefangen und eingelagert wird, und gegebenenfalls,
- bei einer Desulfatisierung stromauf des Stickoxid-Speicherkatalysators (7) eine reduzierende Abgaszusammensetzung eingestellt wird und dabei im Stickoxid-Speicherkatalysator (7) gespeicherte Schwefeloxide unter Bildung von Schwefelwasserstoff freigesetzt werden und
- bei der Desulfatisierung vom Stickoxid-Speicherkatalysator (7) freigesetzter Schwefelwasserstoff dem SCR-Katalysator (8) zugeführt und unter reduzierenden Abgasbedingungen im SCR-Katalysator (8) zu Schwefeldioxid oxidiert wird,
wobei bei oxidierender Abgaszusammensetzung im Abgas enthaltene Stickoxide vom SCR-Katalysator (8) mit vom Stickoxid-Speicherkatalysator (7) bei der Nitratregeneration eingelagerten Ammoniak reduziert werden.

8. Verfahren nach Anspruch 7,
**dadurch gekennzeichnet, dass**
das Abgas zusätzlich durch ein Partikelfilter (6) geleitet wird.

9. Verfahren nach Anspruch 8,
**dadurch gekennzeichnet, dass**
der Abgasnachbehandlungseinrichtung (2) ferner ein Oxidationskatalysator (5) zugeordnet ist und das dem Oxidationskatalysator (5) entströmende Abgas dem Partikelfilter (6) zugeführt wird.

10. Verfahren nach Anspruch 8,
**dadurch gekennzeichnet, dass**
der Abgasnachbehandlungseinrichtung (2) ferner ein Oxidationskatalysator (5) stromauf des Partikelfilters (6) zugeordnet ist und das dem Partikelfilter (6) entströmende Abgas dem Stickoxid-Speicherkatalysator (7) zugeführt wird.

11. Verfahren nach Anspruch 8,
**dadurch gekennzeichnet, dass**
der Abgasnachbehandlungseinrichtung (2) ferner ein Oxidationskatalysator (5) zugeordnet ist und das dem Stickoxid-Speicherkatalysator (7) entströmende Abgas dem Oxidationskatalysator (5) zugeführt wird.

## Claims

1. Internal combustion engine (1), with a control unit (9) and an exhaust gas after-treatment device (2) comprising a nitric oxide storage catalyser (7) and an SCR catalyser (8) arranged downstream from the nitric oxide storage catalyser (7), such that the control unit (9) can from time to time implement a nitrate regeneration phase with the formation of ammonia and the internal combustion engine can be operated in a de-sulphating operating mode in which a reducing exhaust gas composition is produced and hydrogen sulphide is released from the nitric oxide storage catalyser (7) and oxidised in the SCR catalyser (8), the SCR catalyser (8) being capable of storing the ammonia formed during the nitrate regeneration phase and, when the exhaust gas composition is oxidising, reducing nitric oxides present in the exhaust gas by means of the stored ammonia.

2. Internal combustion engine according to Claim 1,
**characterised in that**
the SCR catalyser contains vanadium pentoxide (V₂O₅) and/or tungsten oxide (WO₃) and/or titanium dioxide (TiO₂).

3. Internal combustion engine according to Claims 1 or 2,
**characterised in that**
the exhaust gas after-treatment device (2) also comprises a particle filter (6).

4. Internal combustion engine according to Claim 3,
**characterised in that**
the exhaust gas after-treatment device (2) also comprises an oxidation catalyser (5) located upstream from the particle filter (6).

5. Internal combustion engine according to Claims 3 or 4,
**characterised in that**
in the exhaust gas after-treatment device (2), the nitric oxide storage catalyser (7) is arranged downstream from the particle filter (6).

6. Internal combustion engine according to Claim 4,
**characterised in that**
in the exhaust gas after-treatment device (2), the nitric oxide storage catalyser (7) is arranged upstream from the oxidation catalyser (5).

7. Method for the operation of an exhaust gas after-treatment device of an internal combustion engine, comprising a nitric oxide storage catalyser (7) and an SCR catalyser (8) arranged downstream from the nitric oxide storage catalyser (7), in which:
- when the exhaust gas composition is oxidising, nitric oxides and sulphur oxides present in the exhaust gas are extracted by the nitric oxide storage catalyser (7) and stored, after which
- during a nitrate regeneration phase, nitric oxides stored in the nitric oxide storage catalyser (7) are at least partially reduced to ammonia, and ammonia formed during the nitrate regeneration phase is captured and stored by the SCR catalyser (8), and when necessary
- in a de-sulphating phase a reducing exhaust gas composition is produced upstream from the nitric oxide storage catalyser (7) and during this phase sulphur oxides stored in the nitric oxide storage catalyser (7) are released, with formation of hydrogen sulphide, and
- during the de-sulphating phase hydrogen sulphide released from the nitric oxide storage catalyser (7) passes into the SCR catalyser (8) and, under reducing exhaust gas conditions, is oxidised in the SCR catalyser (8) to sulphur dioxide,
and when the exhaust gas composition is oxidising, nitric oxides present in the exhaust gas are reduced in the SCR catalyser (8) by means of the ammonia formed the nitric oxide storage catalyser (7) stored during the nitrate regeneration phase.

8. Method according to Claim 7,
**characterised in that**
the exhaust gas also passes through a particle filter (6).

9. Method according to Claim 8,
**characterised in that**
an oxidation catalyser (8) is also associated with the exhaust gas after-treatment device (2) and exhaust gas flowing out of the oxidation catalyser (5) passes into the particle filter (6).

10. Method according to Claim 8,
**characterised in that**
an oxidation catalyser (5) is also associated with the exhaust gas after-treatment device (2) upstream from the particle filter (6), and exhaust gas flowing out of the particle filter (6) passes into the nitric oxide storage catalyser (7).

11. Method according to Claim 8,
**characterised in that**
an oxidation catalyser (5) is also associated with the exhaust gas after-treatment device (2), and exhaust gas flowing out of the nitric oxide storage catalyser (7) passes into the oxidation catalyser (5).

## Revendications

1. Moteur à combustion interne (1) avec une unité de commande (9) et un dispositif pour la purification des gaz d'échappement, comprenant un catalyseur à accumulation des oxydes d'azote (7) et un catalyseur SCR (8) disposé en aval du catalyseur à accumulation des oxydes d'azote (7), l'unité de commande (9) pouvant déclencher de temps à autre une régénération des nitrates avec formation d'ammoniac, et commander le moteur à combustion interne (1) en mode de service de désulfatation où une composition réductrice de gaz d'échappement est générée et du sulfure d'hydrogène évacué du catalyseur à accumulation des oxydes d'azote (7) et oxydé dans le catalyseur SCR (8),
le catalyseur SCR (8) étant en mesure de stocker l'ammoniac formé pendant la régénération des nitrates et de réduire au moyen de l'ammoniac stocké les oxydes d'azote contenus dans le gaz d'échappement en cas de composition oxydante de celui-ci.

2. Moteur à combustion interne selon la revendication 1,
**caractérisé**
**en ce que** le catalyseur SCR (8) est réalisé avec une teneur en pentoxyde de vanadium (teneur V₂O₅) et/ou une teneur en oxyde de tungstène (teneur WO₃) et/ou une teneur en dioxyde de titane (teneur TiO₂).

3. Moteur à combustion interne selon la revendication 1 ou 2,
**caractérisé**
**en ce que** le dispositif pour la purification des gaz d'échappement (2) comprend en outre un filtre à particules (6).

4. Moteur à combustion interne selon la revendication 3,
**caractérisé**
**en ce que** le dispositif pour la purification des gaz d'échappement (2) comprend en outre un catalyseur d'oxydation (5) disposé en amont du filtre à particules (6).

5. Moteur à combustion interne selon la revendication 3 ou 4,
**caractérisé**
**en ce que** le catalyseur à accumulation des oxydes d'azote (7) est disposé dans le dispositif pour la purification des gaz d'échappement (2) en aval du filtre à particules (6).

6. Moteur à combustion interne selon la revendication 4,
**caractérisé**
**en ce que** le catalyseur à accumulation des oxydes d'azote (7) est disposé dans le dispositif pour la purification des gaz d'échappement (2) en amont du catalyseur d'oxydation (5).

7. Procédé pour la mise en service d'un dispositif pour la purification des gaz d'échappement d'un moteur à combustion interne, comprenant un catalyseur à accumulation des oxydes d'azote (7) et un catalyseur SCR (8) disposé en aval du catalyseur à accumulation des oxydes d'azote (7), où
- en cas de composition oxydante du gaz d'échappement dans le catalyseur à accumulation des oxydes d'azote, les oxydes d'azote et les oxydes de soufre contenus dans le gaz d'échappement (7) sont prélevés et accumulés,
- les oxydes d'azote accumulés lors d'une régénération des nitrates dans le catalyseur à accumulation des oxydes d'azote (7) sont réduits au moins partiellement en ammoniac, et l'ammoniac formé lors d'une régénération des nitrates est recueilli et stocké par le catalyseur SCR (8), et le cas échéant
- lors d'une désulfatation en amont du catalyseur à accumulation des oxydes d'azote (7), une composition réductrice de gaz d'échappement est réglée et les oxydes de soufre accumulés dans le catalyseur à accumulation des oxydes d'azote (7) sont alors libérés avec formation de sulfure d'hydrogène, et où
- le sulfure d'hydrogène libéré lors de la désulfatation du catalyseur à accumulation des oxydes d'azote (7) est conduit vers le catalyseur SCR (8) et oxydé en oxyde de soufre dans des conditions réductrices de gaz d'échappement dans le catalyseur SCR (8),
les oxydes d'azote contenus dans le gaz d'échappement étant en cas de composition oxydante de celui-ci réduits par le catalyseur SCR (8) avec l'ammoniac stocké par le catalyseur à accumulation des oxydes d'azote (7) lors de la régénération des nitrates.

8. Procédé selon la revendication 7,
**caractérisé**
**en ce que** le gaz d'échappement est en outre passé au travers d'un filtre à particules (6).

9. Procédé selon la revendication 8,
**caractérisé**
**en ce qu'**un catalyseur d'oxydation (5) est en outre affecté au dispositif pour la purification des gaz d'échappement (2), et en ce que le gaz d'échappement sortant du catalyseur d'oxydation (5) est conduit vers le filtre à particules (6).

10. Procédé selon la revendication 8,
**caractérisé**
**en ce qu'**un catalyseur d'oxydation (5) est en outre affecté au dispositif pour la purification des gaz d'échappement (2) en amont du filtre à particules (6), et en ce que le gaz d'échappement sortant du filtre à particules (6) est conduit vers le catalyseur à accumulation des oxydes d'azote (7).

11. Procédé selon la revendication 8,
**caractérisé**
**en ce qu'**un catalyseur d'oxydation (5) est en outre affecté au dispositif pour la purification des gaz d'échappement (2), et en ce que le gaz d'échappement sortant du catalyseur à accumulation des oxydes d'azote (7) est conduit vers le catalyseur d'oxydation (5).
